# EUROPÄISCHE PATENTSCHRIFT

(11) **EP 2 791 540 B1**
(45) Veröffentlichungstag und Bekanntmachung des Hinweises auf die Patenterteilung: **29.08.2018**
(21) Anmeldenummer: 12784263.1
(22) Anmeldetag: 13.11.2012
(51) Int. Cl.: F16D 65/12

(54) **GEBAUTE WELLENBREMSSCHEIBE**
ASSEMBLED AXLE BRAKE DISC
DISQUE DE FREIN ASSEMBLÉ MONTÉ SUR ESSIEU

(30) Priorität: 12.12.2011 DE 202011052267 U
(43) Veröffentlichungstag der Anmeldung: 22.10.2014
(73) Patentinhaber: Faiveley Transport Witten GmbH, 58454 Witten (DE)
(72) Erfinder: WURTH, Sebastian, 51688 Wipperfürth (DE); MEHLAN, Andreas, 59425 Unna (DE)
(74) Vertreter: RGTH
(86) Internationale Anmeldenummer: PCT/EP2012/072475
(87) Internationale Veröffentlichungsnummer: WO 2013/087323

(56) Entgegenhaltungen:
- EP-A2- 1 229 266
- DE-A1- 2 110 482
- DE-A1- 10 143 817
- DE-U1-202009 007 591
- US-A- 6 032 769

## Beschreibung

Die vorliegende Erfindung betrifft eine gebaute Wellenbremsscheibe mit einer Nabe, an der zwei Reibringe parallel und beabstandet zueinander angeordnet sind.

Gebaute Wellenbremsscheiben finden insbesondere für Schienenfahrzeuge Anwendung, und durch die gebaute Form der Wellenbremsscheiben können diese aus mehreren Einzelkomponenten zusammengebaut werden.

Unter einer gebauten Wellenbremsscheibe ist eine Wellenbremsscheibe zu verstehen, die aus mindestens zwei Bauteilen zusammengefügt wird. Insbesondere soll vorliegend mit einer gebauten Wellenbremsscheibe eine Bremsscheibe bezeichnet werden, die zwei Reibringe aufweist, welche nicht einteilig und miteinander struktureinheitlich gebildet sind, beispielsweise wie bekannt in einem Urformverfahren, sondern die einzeln bereitgestellt und bevorzugt durch weitere Elemente zu einem Reibringpaar zusammengebaut sind. Als weiteres Einzelteil kann dabei die Nabe im Zusammenbau mit dem Reibringpaar gefügt werden.

Bekannt sind beispielsweise Wellenbremsscheiben, die eine Nabe aufweisen, an die zwei Reibringe parallel und beabstandet zueinander angebracht werden. Zwischen den Reibringen können sich Stützbolzen erstrecken, die dazu ausgeführt sind, axial wirkende Belaganpresskräfte aufzunehmen. Insbesondere bei schweren Schienenfahrzeugen können die Belaganpresskräfte, die vom Bremsgestänge über die Bremsbeläge auf das Reibringpaar aufgebracht werden, sehr hohe Werte erreichen. Daher ergibt sich das Erfordernis, Wellenbremsscheiben mit zwischen den Reibringen angeordneten Stützbolzen entsprechend steif und mechanisch hoch belastbar auszuführen.

Darüber hinaus ist ein guter Wärmeabtransport gefordert, und es wird häufig vorgesehen, einen Luftstrom zu erzeugen, der beispielsweise die Wellenbremsscheibe axial nabenseitig anströmt und radial außenseitig abströmt. Durch diesen Luftdurchsatz kann durch Wärmekonvektion die Bremsscheibe gekühlt werden, und der Luftstrom wird durch die Rotation der Wellenbremsscheibe um ihre Rotationsachse erzeugt. Insbesondere bei gegossenen Wellenbremsscheiben sind Gussgeometrien zwischen den Reibringen bekannt, die die Geometrie eines Radiallüfters nachbilden, sodass sich der entsprechende Luftdurchsatz durch die Wellenbremsscheibe ergibt.

Unterschieden werden im Wesentlichen zwei Belüftungsarten, die beschriebene radiale Belüftungsart und eine tangentiale Belüftungsart. Weist eine Wellenbremsscheibe zwischen den Reibringen Stützbolzen auf, bewirken diese eher eine tangentiale Belüftung. Durch die Rotation der Wellenbremsscheibe wird die Oberfläche der Stützbolzen tangential angeströmt, wodurch Wärme durch Konvektion abgeführt wird. Dabei lässt sich der Effekt beobachten, dass das Strömungsmedium ebenfalls leicht vom Innendurchmesser zum Außendurchmesser strömt, wie dies auch beim Radiallüfter erfolgt. Dieser Effekt spielt jedoch nur eine untergeordnete Rolle, sodass sich im Wesentlichen ein Axialluftstrom ergibt. Wichtig dabei ist eine optimale Anordnung und Dimensionierung der Stützbolzen, sodass eine große Wärmeabfuhr erreicht wird.

Insbesondere sind gebaute Wellenbremsscheiben als Keramikbremsscheiben bekannt, die Reibringe aus einem Keramikwerkstoff, allgemein jedoch aus einem Werkstoff aus der Gruppe der Kohlenstoffe, aufweist. Häufig ist die Nabe derartiger nicht metallischer Bremsscheiben aus einem Stahlwerkstoff hergestellt, und es sind aufwändige Verbindungsgeometrien erforderlich, um wärmebedingte Verspannungen zwischen dem Keramik- oder Kohlenstoffwerkstoff und der metallischen Nabe zur Aufnahme der Reibringe zu vermeiden.

### Stand der Technik

Aus der DE 195 07 922 C2 ist eine gebaute Wellenbremsscheibe bekannt, die zwei parallel und beabstandet zueinander an einer Nabe angeordnete Reibringe aufweist, die auf einfache Weise aus einem Blech ausgebrannt sein können. Zwischen den Reibringen befindet sich ein Lüftereinsatz, der zur Verbesserung der Kühlung an der Innenseite der Reibringe dient. Um für den Bremsvorgang axial wirkende Belaganpresskräfte aufzunehmen, ist der gezeigte Lüftereinsatz jedoch ungeeignet, und Axialkräfte, die durch die Bremszange über die Bremsbeläge auf die Reibringe aufgebracht werden, müssen über die Verbindung der Reibringe mit der Nabe aufgenommen werden. Daher ergibt sich eine mechanisch eher geringer belastbare Konstruktion einer Wellenbremsscheibe.

Aus der DE 195 43 799 A1 ist eine weitere gebaute Wellenbremsscheibe bekannt, und zwischen aus einem Werkstoff der Gruppe der Kohlenstoffe hergestellten Reibringen erstrecken sich Stützbolzen, um die hohen axial wirkenden Belaganpresskräfte aufzunehmen. Dabei sind die Bolzen mit einem Bund ausgeführt, wodurch Belaganpresskräfte formschlüssig übertragen werden können. Ein derartiger Aufbau ist für gebaute Wellenbremsscheiben mit Reibringen bekannt, die aus Keramik oder einem Werkstoff aus der Gruppe der Kohlenstoffe hergestellt sind. Der gebauten Form der Wellenbremsscheibe bedient man sich insbesondere deshalb, da stoffschlüssige Verbindungen zwischen den Reibringen aus einem Werkstoff aus der Gruppe der Kohlenstoffe mit einer Nabe, die in der Regel aus einem Stahlwerkstoff hergestellt ist, nicht auf einfache Weise verwendbar sind. Folglich werden Schraubverbindungen oder sonstige kraft- oder formschlüssige Verbindungstechniken verwendet, wobei in der Montagefuge zwischen den Reibringen und der Nabe häufig noch Elemente angeordnet sind, die die unterschiedliche Wärmedehnung zwischen der Nabe aus einem Stahlwerkstoff und den Reibringen aus Keramik oder einem Werkstoff aus der Gruppe der Kohlenstoffe ausgleichen, beispielsweise gebildet durch Nutensteine.

Die DE 101 43 817 A1 offenbart eine Bremsscheibe für eine Kraftfahrzeugbremse mit einem Reibring, der zwei Ringelemente umfasst, und mit einem Reibringträger, an dem der Reibring formschlüssig befestigt ist. Die Ringelemente sind in Umfangsrichtung formschlüssig miteinander verbunden und axial mittels mehrerer Verbindungselemente aneinander befestigt.

Aus der EP 1 229 266 A2 ist eine gebaute Bremsscheibe für ein Kraftfahrzeug bekannt, mit zwei Reibringen, zwischen denen eine Mitnehmerscheibe angeordnet ist. Zwischen den beiden Reibringen sind im mit Reibungs-Bremsbelägen zusammenwirkenden Bereich Distanzstücke vorgesehen, welche in langlochartige Durchbrüche der Mitnehmerscheibe eingehängt sind, wozu die Durchbrüche im Wesentlichen die Form eines Schlüssellochs haben.

### Darstellung der Erfindung: Aufgabe, Lösung, Vorteile

Es ist daher die Aufgabe der vorliegenden Erfindung, eine gebaute Wellenbremsscheibe mit Reibringen aus einem Stahlwerkstoff bereitzustellen, die hohen mechanischen Belastungen standhalten kann und die eine gute Innenbelüftung ermöglicht.

Diese Aufgabe wird ausgehend von einer gebauten Wellenbremsscheibe mit einer Nabe und Reibringen gemäß dem Stand der Technik und den kennzeichnenden Merkmalen des Anspruches 1 gelöst. Vorteilhafte Weiterbildungen der Erfindung sind in den abhängigen Ansprüchen angegeben.

Die Erfindung schließt die technische Lehre ein, dass die gebaute Wellenbremsscheibe mit einer Nabe und zwei aus einem Stahlwerkstoff hergestellten Reibringen aufgebaut ist, die parallel und beabstandet zueinander an der Nabe angeordnet sind, wobei zwischen den Reibringen Stützbolzen zur Aufnahme einer axial wirkenden Belaganpresskraft angeordnet sind,
wobei die Stützbolzen rotationssymmetrisch ausgebildet sind und einen Mittelabschnitt und endseitige Zapfen aufweisen, wobei der Mittelabschnitt einen kleineren Durchmesser aufweist als die endseitigen Zapfen, und wobei die Reibringe mittels Kulissensteinen und Verbindungsschrauben mit der Nabe verbunden sind.

Die Reibringe können dabei eine eigene, unabhängig von der Nabe zusammenbaubare Baugruppe darstellen und gemeinsam mit den Stützbolzen ein Reibringpaar bilden. Diese Baugruppe kann dann über bekannte Verfahren mit der Nabe verbunden werden, die wiederum ein eigenständiges Bauteil darstellt. Reibring und Nabe können demnach unabhängig voneinander gefertigt und bereitgestellt werden. Dies bietet vor allem einen Vorteil bei dem Austausch von Reibringpaaren an einer Nabe.

Die gebaute Wellenbremsscheibe weist damit mehrere Einzelteile auf, die wenigstens durch eine Nabe, zwei aus einem Stahlwerkstoff hergestellte Reibringe und eine Anzahl von Stützbolzen ausgebildet sind. Ähnlich dem Aufbau einer Keramik- oder Kohlenstoff- Bremsscheibe, auch bekannt unter der Bezeichnung Carbonbremsen, kann erfindungsgemäß eine Wellenbremsscheibe als gebaute Bremsscheibe bereitgestellt werden, mit der alle funktionswesentlichen Bauteile aus einem Stahlwerkstoff bestehen. Insbesondere die Reibringe können mit Vorteil aus einem Stahlblech ausgeschnitten werden, beispielsweise mittels Laserstrahlschneiden, mittels Wasserstrahlschneiden oder einem sonstigen thermischen oder abrasiven Trennverfahren, jedoch können die Reibringe auch aus einem Stahlblech mechanisch ausgeschnitten werden. Die Bolzen können aus beliebigen Materialien, jedoch auch vorzugsweise aus Stahl hergestellt werden. Auch die Nabe kann insbesondere aus Stahl hergestellt werden, um wärmedehnungsbedingte Verspannungen mit einer Welle, auf der die Wellenbremsscheibe aufgebracht wird, zu vermeiden.

Im Ergebnis wird erfindungsgemäß eine gebaute Wellenbremsscheibe bereitgestellt, die nach Art eines Baukastensystems aus verschiedenen Materialien zusammengesetzt werden kann. Vorteilhaft ist neben der freien Materialauswahl zudem, dass die Geometrie des Reibringpaares und/oder der Nabe beliebig verändert werden kann. Hierdurch kann insbesondere das Reibringpaar sehr schnell an veränderte Randbedingungen angepasst werden und verschieden ausgeführte Reibringpaare können an einer einzigen Nabe durch schnellen Austausch montiert und wieder demontiert werden.

Insbesondere sind jedoch die Reibringe aus einem Stahlwerkstoff gebildet, wobei zumindest bei den Stützbolzen eine freie Materialwahl ermöglicht ist, um die einzelnen Komponenten der Wellenbremsscheibe hinsichtlich ihrer mechanischen und thermischen Belastungen zu optimieren. Schließlich kann das Gewicht der Wellenbremsscheibe weiter optimiert werden, da Geometrien Verwendung finden können, die gusstechnisch nicht grundsätzlich herstellbar sind.

Mit Vorteil können die Reibringe Löcher aufweisen, in die die Stützbolzen endseitig eingesetzt werden. Die Stützbolzen sind rotationssymmetrisch ausgebildet und weisen einen Mittelabschnitt und endseitige Zapfen auf. Beim Zusammenbau der Wellenbremsscheibe können die endseitigen Zapfen der Stützbolzen in die Löcher in den Reibringen eingesetzt werden. Die Länge der Zapfen bestimmt dabei die Dicke der Wellenbremsscheibe, die beispielsweise 80 mm betragen kann.

Der Mittelabschnitt der Stützbolzen ist kleiner ausgebildet als der Durchmesser der endseitigen Zapfen, auch wenn es grundsätzlich denkbar wäre, dass der Mittelabschnitt der Stützbolzen größer ist als der Durchmesser der endseitigen Zapfen. Jedoch sind erfindungsgemäß Stützbolzen vorzusehen, die einen Mittelabschnitt mit einem kleinen Durchmesser aufweisen. Dies dient zur Aufnahme der Toleranz der Bleche. Außerdem ist eine Kontrolle der Schweißnaht möglich. Zudem kann die Dicke der Reibringe ausgeglichen werden, ohne dass eine zusätzliche mechanische Bearbeitung anfällt.

Die Verbindung zwischen den Stützbolzen und den Reibringen, insbesondere zwischen den endseitigen Zapfen, die in die Löcher der Reibringe eingesetzt sind, kann durch eine Pressverbindung, durch eine Lötverbindung, durch eine Schweißverbindung oder durch eine Nietverbindung ausgeführt sein. Schließlich kann auch eine Schraubverbindung mit Verbindungsschrauben vorteilhaft ausgeführt sein. Besteht die Verbindung zwischen den Stützbolzen und den Reibringen aus einer Lötverbindung, kann diese beispielsweise durch ein Hochtemperaturlöten oder Hartlöten hergestellt werden. Dabei können Löttemperaturen Verwendung finden, die im normalen Betrieb der Bremsscheibe nicht auftreten.

Ist die Verbindung zwischen den Stützbolzen und den Reibringen durch eine Schweißverbindung hergestellt, kann hierfür beispielsweise ein Laserstrahlschweißen, ein Elektronenstrahlschweißen oder weitere mögliche Schweißverfahren Verwendung finden. Gerade beim Elektronenstrahlschweißen ist der thermische Eintrag in die zu fügenden Komponenten minimal, sodass sich insbesondere in den Reibringen nur ein minimaler thermischer Verzug durch das Schweißverfahren bilden kann und weswegen dieses Verfahren vorteilhaft Anwendung finden soll. Durch die stoffschlüssige Verbindung wird vorteilhaft erreicht, dass die Wärme, die in den Reibringen durch den Betrieb der Wellenbremsscheibe entsteht, in die Stützbolzen geleitet werden kann, sodass die Wärme durch die Innenbelüftung besonders wirkungsvoll abgeführt werden kann.

Mit besonderem Vorteil kann die Lötverbindung in einem entsprechenden Ofen hergestellt werden, wobei zugleich eine Wärmebehandlung beispielsweise der Reibringe mit dem Hochtemperaturlöten einhergehen kann. Durch diese Verbindungstechnologie wird der Vorteil erreicht, dass mit dem Verbindungsvorgang, nämlich dem Hochtemperaturlöten, auch ein Härtungsvorgang der weiteren Komponenten, insbesondere der Reibringe, erzeugt werden kann. Hierdurch werden mehrere Vorteile erreicht, da ein optimales Material geschaffen wird, das durch nachfolgende Bearbeitungs- oder Verbindungsvorgänge in seinen Materialeigenschaften nicht mehr verändert wird und es kann erreicht werden, dass durch die Schaffung der Verbindung zur Härtung in einem Vorgang auch ein kostenmäßiger Herstellungsvorteil erzielt wird.

Auch ist es vorteilhaft, zwischen den Reibringen Kühlelemente anzuordnen, die insbesondere auf der Innenseite der Reibringe aufgeschweißt oder aufgelötet sind. Ferner können die Kühlelemente an der Innenseite der Reibringe angeschraubt werden oder stirnseitig aufgelötet werden.

Die Kühlelemente vergrößern die Energiespeicherkapazität der Bremsscheibe. Wärme wird dabei vom Reibring in die Kühlelemente geleitet und dort durch Konvektion abgeführt. Somit wird durch die Kühlelemente die Konvektionsoberfläche vergrößert, wodurch mehr Energie an das Strömungsmedium abgegeben werden kann.

Zusätzlich können die Kühlelemente so ausgestaltet sein, dass diese den Kühlluftstrom durch die Wellenbremsscheibe begünstigen, indem die Kühlelemente beispielsweise eine turbinenschaufelartige Form aufweisen. Die Kühlelemente können Blechelemente sein, oder alternativ oder zusätzlich kann zu den Kühlelementen eine Anzahl von Stützbolzen an den Innenseiten der Reibringe angeordnet werden, die jedoch eine Länge aufweisen, die kürzer sind als die Stützbolzen, die sich zwischen den beiden Reibringen erstrecken und diese miteinander verbinden. Bei der Anordnung der verkürzten Stützbolzen ergibt sich noch der weitere Vorteil dahingehend, dass die Anordnung derartiger verkürzter Stützbolzen zur Ausbildung eines optimalen Verhältnisses von Kühl- und Verlustleistung erfolgen kann und auch die Geometrie der einzelnen Stützbolzen kann mit großer Gestaltungsfreiheit gewählt werden.

Mit weiterem Vorteil kann das Material der Kühlelemente unabhängig gewählt werden. Möglich sind Stahl- und Gussmaterialien. Zudem können jedoch auch Nichteisenmetalle, wie z.B. Aluminium oder Kupfer, oder deren Legierungen verwendet werden. Auch die Oberflächenbeschaffenheit der angeströmten Mantelfläche kann in Bezug auf thermische und strömungsmechanische Eigenschaften optimiert werden.

Es kann eine innere Reihe von Stützbolzen vorgesehen sein, die axiale Durchgänge aufweisen, durch die sich die Verbindungsschrauben hindurch erstrecken. Die Verbindungsschrauben können beispielsweise in ein Innengewinde eingeschraubt werden, dass in einer der Reibringe eingebracht ist, oder es werden Schraubenmuttern vorgesehen, in die die Verbindungsschrauben eingeschraubt werden. Falls Temperaturbelastung sehr hoch ist, könnte die auf der Verbindungsschraube endseitig aufgebrachte Mutter als Hülse ausgeformt werden und so das Gewinde von der Temperatureinwirkung entkoppelt werden. Zudem könnte bei Verwendung von zwei Hülsen Bauraum eingespart werden. Damit können der Befestigungsring, die Reibringe und insbesondere die Stützbolzen mit den Durchgängen auf Block verschraubt werden, wodurch eine besonders starre Verbindung zwischen den Reibringen und der Nabe erzielt wird. In dieser Variante werden zudem Kulissensteine eingesetzt.

An der Nabe können Nocken angeformt sein, die sich radial nach außen gerichtet zwischen die Reibringe erstrecken und durch die Verbindungsschrauben hindurch geführt sind. Über die Nocken kann damit das Bremsmoment von den Reibringen auf die Nabe übertragen werden, wobei die Nocken Aussparungen aufweisen können, in die wiederum Kulissensteine eingesetzt werden können, die üblicherweise aus vergütetem Stahl oder Gusseisen bestehen können. Insbesondere können die Kulissensteine in den Aussparungen der Nocken eine geringfügige radiale Beweglichkeit aufweisen, um Unterschiede in der radialen Wärmedehnung zwischen der Nabe und den Reibringen auszugleichen.

Weiterhin können die Reibringe radial nach innen weisende Vorsprünge aufweisen, die in Aussparungen eingreifen können, die in der Nabe eingebracht sind. Damit wird ein Formschluss erreicht, insbesondere zur Übertragung der Bremsmomente, die von den Reibringen auf die Nabe wirken.

Es können Befestigungsringe vorgesehen sein, die auf der Außenseite auf den Reibringen im radial inneren Bereich anliegen. Dabei können sich Verbindungsschrauben durch die Befestigungsringe und wenigstens durch einen Teil oder eine Anformung der Nabe hindurch erstrecken, wobei insbesondere Keramikunterlegscheiben vorgesehen sein können, die zwischen dem Schraubenkopf der Verbindungsschrauben beziehungsweise zwischen Schraubenmuttern auf den Verbindungsschrauben und den Reibringen angeordnet sind. Damit wird eine Wärmebarriere geschaffen, sodass höhere Temperaturen, die in den Reibringen entstehen können, nicht unmittelbar auf die Nabe übertragen werden. Die Befestigungsringe erfüllen zudem den Zweck, dass die Verbindungsschrauben nicht auf Biegung beansprucht werden können, wobei der Befestigungsring aus einem Material ausgebildet sein kann, das durch einen kleinen Ausdehnungskoeffizienten gekennzeichnet ist. Bereits damit kann ein Wärmeübergang von den Reibringen auf die Nabe minimiert werden.

Die formschlüssige Verbindung von Reibringen und Nabe eignet sich des Weiteren für eine geteilte Version des Reibringpaares. Hierzu könnte die Teilungsebene des Reibringpaares mittig in die radial nach innen weisenden Vorsprünge gelegt werden. Demnach könnte ein definierter Anteil der Fliehkräfte, die auf das geteilte Reibringpaar wirken, über die Nocken der Nabe übertragen werden. Eine mögliche Teilungsverschraubung der beiden Reibringhälften könne demnach kleiner dimensioniert werden.

Schließlich ermöglicht die Verwendung einer formschlüssigen Verbindung die Verwendung von im Vergleich zu aktuellen Verbindungen größeren Nabendurchmessern. Da in diesem Fall das Bremsmoment über den Formschluss von Reibringen und Nabe übertragen wird, entfallen Verbindungselemente, die in anderen Ausführungen das Bremsmoment übertragen. Hierdurch kann Bauraum eingespart werden, der entsprechend zur Vergrößerung der Nabendurchmesser verwendet werden kann.

### Kurze Beschreibung der Zeichnungen

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
Figur 1 ein perspektivisch dargestellter Ausschnitt einer Wellenbremsscheibe nach einem ersten Ausführungsbespiel in einem teilmontierten Zustand,
Figur 2 das Ausführungsbeispiel der Wellenbremsscheibe gemäß Figur 1 in einem montierten Zustand,
Figur 3 das Ausführungsbeispiel der Wellenbremsscheibe gemäß der Figuren 1 und 2 mit an einer Nabe montiertem Reibringpaar in einer quergeschnittenen Ansicht,
Figur 4 eine perspektivische Ansicht eines Reibringes des Ausführungsbeispiels der Wellenbremsscheibe gemäß der Figuren 1 bis 3 zur Bildung eines Reibringpaares,
Figur 5 eine perspektivische Ansicht der Nabe des Ausführungsbeispiels der Wellenbremsscheibe gemäß der Figuren 1 bis 4,
Figur 6 ein perspektivisch dargestellter Ausschnitt einer Wellenbremsscheibe nach einem zweiten Ausführungsbeispiel,
Figur 7 das Ausführungsbeispiel der Wellenbremsscheibe gemäß der Figur 6 mit an einer Nabe montiertem Reibringpaar in einer quergeschnittenen Ansicht,
Figur 8 eine perspektivische Ansicht eines Reibringes des Ausführungsbeispiels der Wellenbremsscheibe gemäß der Figuren 6 und 7 zur Bildung eines Reibringpaares,
Figur 9 eine perspektivische Ansicht der Nabe des Ausführungsbeispiels der Wellenbremsscheibe gemäß der Figuren 6 bis 8,
Figur 10 ein perspektivisch dargestellter Ausschnitt einer Wellenbremsscheibe nach einem dritten Ausführungsbeispiel,
Figur 11 das Ausführungsbeispiel der Wellenbremsscheibe gemäß der Figur 10 mit an einer Nabe montiertem Reibringpaar in einer quergeschnittenen Ansicht,
Figur 12 eine perspektivische Ansicht eines Reibringpaares aus zwei Reibringen des Ausführungsbeispiels der Wellenbremsscheibe gemäß der Figuren 10 und 11,
Figur 13 eine perspektivische Ansicht der Nabe des Ausführungsbeispiels der Wellenbremsscheibe gemäß der Figuren 10 bis 12 und
Figur 14 eine perspektivische Ansicht eines Befestigungsringes mit an diesem angeordneten Bolzen.

Gleiche Bezugszeichen verschiedener Ausführungsbeispiele bezeichnen gleiche Funktionsbauteile mit leicht unterschiedlichen Merkmalen.

### Bevorzugte Ausführungsformen der Erfindung

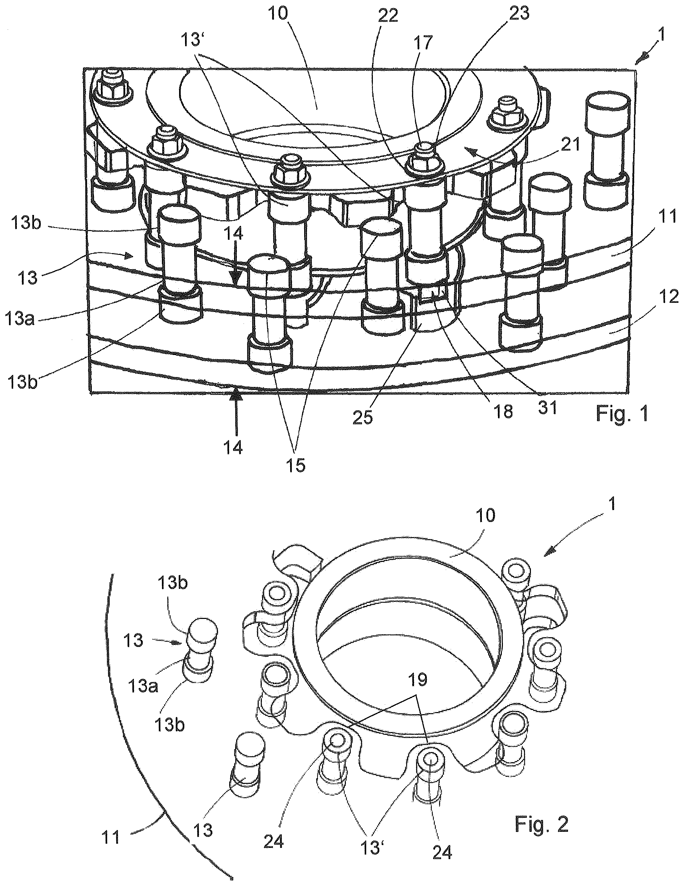

Figur 1 zeigt ausschnittsweise ein Ausführungsbeispiel einer erfindungsgemäßen Wellenbremsscheibe 1 mit einer Nabe 10, an der ein erster Reibring 11 und ein beabstandet und parallel zum ersten Reibring 11 angeordneter zweiter Reibring 12 angeordnet ist und die gemeinsam ein Reibringpaar bilden. Die Wellenbremsscheibe 1 kann in einer Bremsanlage eines Schienenfahrzeugs Verwendung finden, und die Reibringe 11 und 12 dienen als Reibpartner für Bremsklötze, die mit einer Bremszange außenseitig auf die Reibringe 11 und 12 aufgepresst werden können. Zwischen den Reibringen 11 und 12 sind mehrere Stützbolzen 13 angeordnet, die zur Aufnahme der axial wirkenden Belaganpresskräfte 14 dienen und die Verformung der Reibflächen durch statische und dynamische Schirmung verhindern. Die Reibringe 11 und 12 sind aus Stahlwerkstoff hergestellt und sind durch Laserstrahlschneiden oder durch Wasserstrahlschneiden aus einem Blechmaterial ausgeschnitten.

Die Stützbolzen 13 weisen einen Mittelabschnitt 13a und sich endseitig an den Mittelabschnitt 13a anschließende endseitige Zapfen 13b auf. Die endseitigen Zapfen 13b können sich in die Löcher 15 in den Reibringen 11 und 12 hinein erstrecken, und zur Verbindung zwischen den Stützbolzen 13 und den Reibringen 11 und 12 können die endseitigen Zapfen 13b in den Löchern 15 verlötet, verschweißt, verklebt oder verpresst werden.

Das gezeigte Ausführungsbeispiel weist Stützbolzen 13 mit einem Mittelabschnitt 13a auf, der einen kleineren Durchmesser aufweist als die Endseitigen Zapfen 13b. Der Durchmessersprung erlaubt eine Sichtkontrolle der Naht nach Applikation eines stoffschlüssigen Fügeverfahrens der endseitigen Zapfen 13b in den Löchern 15. Des Weiteren sind die Zapfen 13b länger als die Dicke der verwendeten Platten, um Toleranzen dieser Platten aufzunehmen.

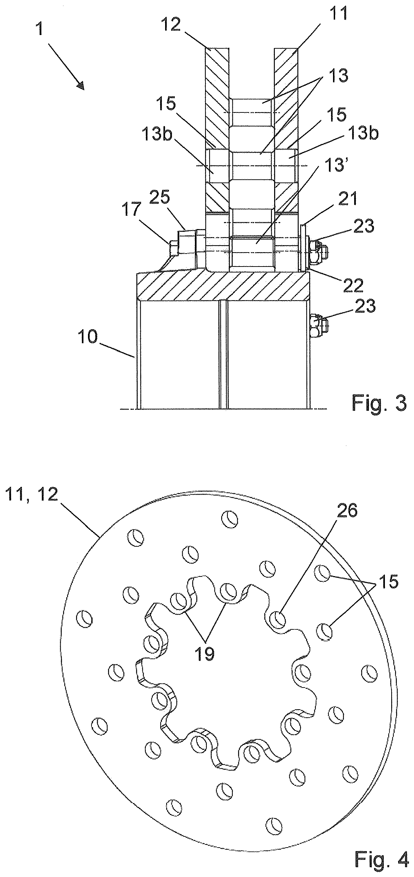

Ferner ist eine weitere Reihe von Stützbolzen 13' gezeigt, durch die Verbindungsschrauben 17 hindurch geführt sind, und auf die endseitig Schraubenmuttern 23 aufgeschraubt sind (detaillierte Beschreibung siehe Fig. 3). Weiterhin verschraubt ist mit den Verbindungsschrauben 17 und den Schraubenmuttern 23 ein Befestigungsring 21, wodurch die Verbindungsschrauben 17 nicht auf Biegung beansprucht werden.

Im Schraubverbund der Verbindungsschrauben 17 sind weiterhin Kulissensteine 18 vorgesehen, die in Nuten 31 eingesetzt sind, und die Nuten 31 befinden sich in Vorsprüngen 25, die an der Nabe 10 angeformt sind. Der Kulissenstein 18 ist aus Vergütungsstahl gefertigt und hat nur einen vernachlässigbaren Einfluss auf die Wärmeleitung zwischen den Reibringen 11, 12 und der Nabe 10.

Um einen Wärmeübergang zwischen Reibring 11 und Befestigungsring 21 zu verringern, befinden sich zwischen Reibring 11 und Befestigungsring 21 Keramikunterlegscheiben 22 aus keramischen bzw. faserverstärkten keramischen Materialen. Alternativ kann der Befestigungsring aus Stahl gefertigt werden, der einen kleinen Wärmeausdehnungskoeffizienten besitzt.

Figur 2 zeigt eine weitere perspektivische Ansicht der Wellenbremsscheibe 1 mit der Nabe 10 gemäß Figur 1, wobei die innere Reihe von Stützbolzen 13' gezeigt ist, die mit axialen Durchgängen 24 ausgebildet sind, durch die die in Figur 1 gezeigten Verbindungsschrauben 17 hindurchgeführt werden können. Dabei ist gezeigt, dass der Reibring 11 radial nach innen weisende Vorsprünge 19 aufweist, in die die Stützbolzen 13' mit den Durchgängen 24 hineinragen, sodass eine feste Verbindung zwischen den Stützbolzen 13' und dem Reibring 11 erzeugbar ist, wenn die Verbindungsschrauben 17 durch die axialen Durchgänge 24 hindurchgeführt werden. Eine weitere Reihe von Stützbolzen 13 zeigt eine Ausführung der Stützbolzen 13 mit einem Mittelabschnitt 13a, der einen kleineren Durchmesser aufweist als die endseitigen Zapfen 13b der Stützbolzen 13, die mit den Reibringen 11 und 12 verbunden sind, wobei der Reibring 12 auf gleiche Weise Vorsprünge 19 aufweisen kann wie der Reibring 11, und die Stützbolzen 13' erstrecken sich mit ihrem gegenüberliegenden Ende in die Vorsprünge 19 des nicht näher dargestellten Reibringes 19 hinein.

Figur 3 zeigt das Ausführungsbeispiel der Wellenbremsscheibe 1 gemäß der Figuren 1 und 2 in einer quergeschnittenen Ansicht. Der Querschnitt zeigt die Nabe 10 mit radial nach außen gerichteten Vorsprüngen 25, von denen in der Querschnittsansicht ein Vorsprung 25 sichtbar ist. An den Vorsprüngen 25 ist das Reibringpaar aus den Reibringen 11 und 12 mit der Nabe 10 drehmomentübertragend verbunden. Zur Verbindung der Reibringe 11 und 12 sind Verbindungsschrauben 17 vorgesehen, die sich durch Löcher in den Vorsprüngen 25 hindurch erstrecken. Weiterhin erstrecken sich die Verbindungsschrauben 17 durch Stützbolzen 13' mit jeweiligen Durchgängen, und auf der dem Schraubenkopf der Verbindungsschraube 17 gegenüberliegenden Seite sind Schraubenmuttern 23 auf die Verbindungsschrauben 17 aufgeschraubt. Folglich werden durch die Verbindungsschrauben 17 der Vorsprung 25, die Reibringe 11 und 12 sowie die Stützbolzen 13' "auf Block" verschraubt. Unter den Schraubenmuttern 23 befindet sich der Befestigungsring 21, wobei zwischen dem Befestigungsring 21 und den Schraubenmuttern 23 Keramikunterlegscheiben 22 gezeigt sind. Weiterhin sind Stützbolzen 13 gezeigt, die sich zwischen den Reibringen 11 und 12 erstrecken, und die massiv und ohne Durchgangsbohrung ausgeführt sind und sich mit ihrem endseitigen Zapfen 13b in die Löcher 15 in den Reibringen 11 und 12 hinein erstrecken. Die gezeigte Anordnung ermöglicht vorteilhafterweise eine Entnahme des Reibringpaares aus den Reibringen 11 und 12 mit den Stützbolzen 13 von der Nabe 10 durch einfaches Lösen der Verbindungsschrauben 17. Beispielsweise kann ein Austausch eines verschlissenen Reibringpaares somit auf einfache Weise erfolgen, und abhängig von der Einbausituation der Wellenbremsscheibe 1 muss die Nabe 10 nicht von einer Welle gelöst werden, um das Reibringpaar mit den Reibringen 11 und 12 auszutauschen.

Figur 4 stellt einen Reibring 11 beziehungsweise 12 in einer perspektivischen Ansicht dar. Der Reibring 11 beziehungsweise 12 kann aus einem Blechmaterial entsprechender Dicke durch ein thermisches Schneidverfahren, beispielsweise durch Laserstrahlschneiden, ausgeschnitten werden. Beim Laserstrahlschneiden eignet sich als Schneidgas insbesondere Sauerstoff. Ebenso kann ein abrasives Trennverfahren Verwendung finden, beispielsweise ein Wasserstrahlschneiden. Auf der planen Reibfläche des Reibringes 11 bzw. 12 sind Löcher 15 gezeigt, in die die Stützbolzen 13 mit ihren endseitigen Zapfen 13b eingesetzt werden können. Innenseitig weist der Reibring 11 bzw. 12 radial nach innen weisende Vorsprünge 19 auf, in denen Durchgangsbohrungen 26 eingebracht sind und durch die die Verbindungsschrauben 17 hindurch geführt werden können. Der Reibring 11 bzw. 12 wird mit einer radialen Ausrichtung auf die Nabe 10 aufgesetzt, in welcher Ausrichtung die Vorsprünge 19 der Reibringe 11, 12 mit den Nocken 25 der Nabe 10 fluchten.

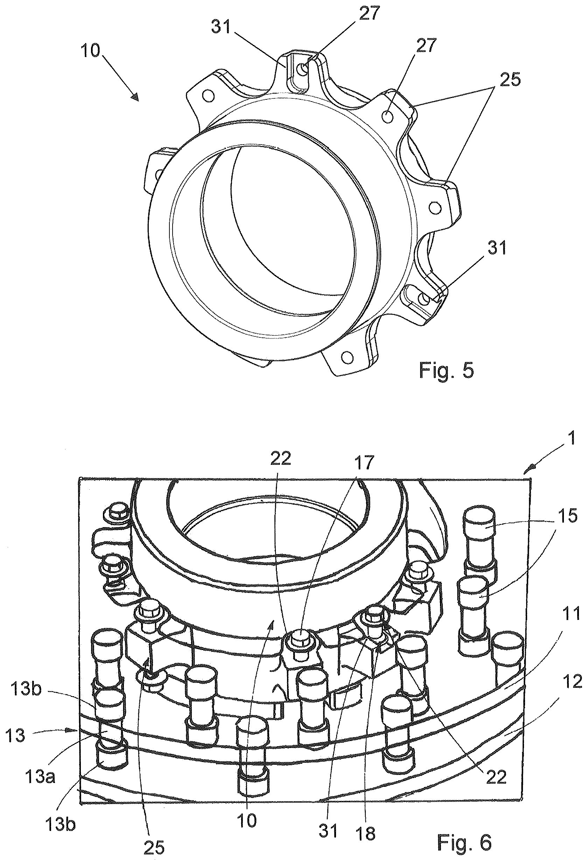

Figur 5 zeigt schließlich eine Nabe 10 in einer perspektivischen Ansicht, die mehrere Vorsprünge 25 an ihrem Außenumfang aufweist. In den Vorsprüngen 25 sind Durchgangsbohrungen 27 eingebracht, durch die sich Verbindungsschrauben 17 hindurch erstrecken können und die mit den Durchgangsbohrungen 26 in den Reibringen 11 und 12 und mit den axialen Durchgängen 24 in den Stützbolzen 13' fluchten. In einigen der Vorsprünge 25 sind Nuten 31 eingebracht, in die die in Figur 1 gezeigten Kulissensteine 18 eingesetzt werden können.

Figur 6 zeigt ein weiteres Ausführungsbeispiel einer Wellenbremsscheibe 1 mit einer Nabe 10, die radial nach außen geformte Nocken 25 aufweist. Die Nocken 25 weisen Durchgänge auf, durch die die Verbindungsschrauben 17 hindurchgeführt sind, sodass eine Verbindung mit dem Reibring 11 entsteht, durch den hindurch sich die Verbindungsschrauben 17 ebenfalls erstrecken. Unter den Köpfen der Verbindungsschrauben 17 sind wiederum Keramikunterlegscheiben 22 angeordnet, und in den Nocken 25 der Nabe 10 sind eingefräste Nuten 31 eingebracht, in die Kulissensteine 18 eingesetzt sind. Die Nuten 31 können auch in die Reibflächen gefräst werden. Fräst man die Nuten 31 in den Nocken 25 der Nabe 10, so benötigt man ein Werkzeug, das mindestens der Hälfte der Höhe der Nabe entspricht. Auch in diesem Ausführungsbeispiel sind Stützbolzen 13 gezeigt, die einen Mittelabschnitt 13a mit einem geringeren Durchmesser und endseitige Zapfen 13b mit einem größeren Durchmesser aufweisen, und die Stützbolzen 13 sind mit den endseitigen Zapfen 13b mit den Reibringen 11 und 12 verbunden.

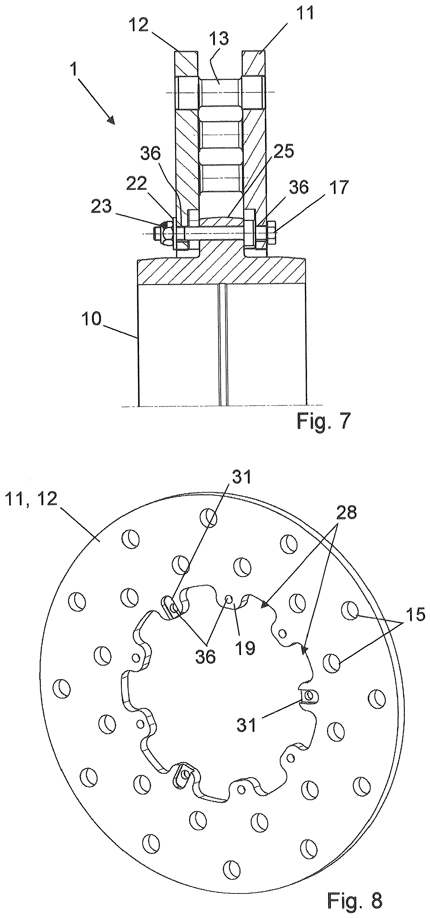

Figur 7 zeigt eine quergeschnittene Ansicht durch die Wellenbremsscheibe 1 gemäß dem Ausführungsbeispiel aus Figur 6. Die Wellenbremsscheibe 1 weist ein Reibringpaar aus den Reibringen 11 und 12 auf, die Stützbolzen 13 besitzen, die sich zwischen den Reibringen 11 und 12 erstrecken. Um das Reibringpaar aus den Reibringen 11 und 12 an der Nabe 10 zu befestigen, weist die Nabe 10 Nocken 25 auf, die sich radial nach außen erstrecken. Durch die Nocken 25 können Verbindungsschrauben 17 hindurchgeführt werden, die sich gleichermaßen durch Bohrungen 36 in den Reibringen 11 und 12 erstrecken. Wird die Schraubenmutter 23 auf das freie Ende der Verbindungsschraube 17 aufgeschraubt, so können die Reibringe 11 und 12 mit den Nocken 25 der Nabe 10 "auf Block" verschraubt werden, wobei sich die Nocken 25 zwischen den Reibringen 11 und 12 befinden. Auch in diesem Ausführungsbeispiel ist eine Keramikunterlegscheibe 22 unter der Schraubenmutter 23 gezeigt. Soll das Reibringpaar aus den Reibringen 11 und 12 von der Nabe 10 gelöst werden, können die Verbindungsschrauben 17 entnommen werden, um anschließend die Nabe 10 gegenüber dem Reibringpaar leicht zu verdrehen. Damit können die Nocken 25 durch Aussparungen 28 axial hindurchgeführt werden, um das Reibringpaar von der Nabe 10 zu entnehmen, ohne die beiden Reibringe 11 und 12 voneinander lösen zu müssen.

Figur 8 stellt eine perspektivische Ansicht der Reibringe 11 bzw. 12 dar, in denen eine Vielzahl von Löchern 15 zur Aufnahme der Stützbolzen 13 eingebracht sind. Die Bohrungen 36 in den Reibringen 11 und 12 zur Hindurchführung der Verbindungsschrauben 17 sind in radial nach innen weisende Vorsprünge 19 eingebracht, zwischen denen sich die Aussparungen 28 erstrecken. In einigen der Vorsprünge 19 sind Nuten 31 zur Aufnahme von Kulissensteinen 18 eingefräst, wie bereits in Figur 6 im zusammengebauten Zustand dargestellt.

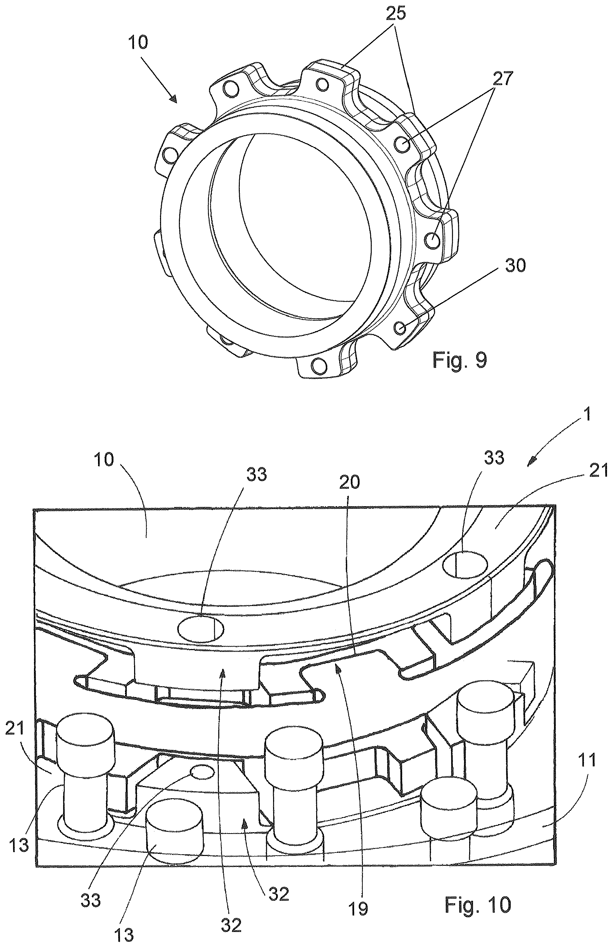

Schließlich zeigt Figur 9 eine perspektivische Ansicht der Nabe 10 gemäß dem Ausführungsbeispiel aus Figur 6 mit radial nach außen ragenden Nocken 25, in denen Durchgangsbohrungen 27 eingebracht sind, durch die die Verbindungsschrauben 17 hindurchgeführt werden können (siehe Fig. 7). Die Durchgangsbohrungen 27 können als Durchgangsbohrung zur Hindurchführung einfacher Verbindungsschrauben 17 mit einem Gewindeschaft vorgesehen sein, und durch die Durchgangbohrungen 30, die mit in den Reibringen 11 und 12 eingebrachten Nuten 31 zur Aufnahme der Kulissensteine 18 korrespondieren, können Zylinderstifte hindurchgeführt werden, um ein entsprechendes Toleranzmaß zwischen der Nabe 10 und dem Reibringpaar zu schaffen und die Passung über die Kulissensteine 18 auf das Reibringpaar zu übertragen. Die Durchgangbohrungen 30 zur Hindurchführung der Zylinderstifte können beispielsweise einen größeren Durchmesser aufweisen als die Durchgangbohrungen 27 zur Hindurchführung einfacher Verbindungsschrauben 17.

Figur 10 zeigt die Nabe 10 in einer weiteren Ausführungsform der Wellenbremsscheibe 1 mit Aussparungen 20, in die Vorsprünge 19 der Reibringe 11 und 12 eingesetzt sind. Die Vorsprünge 19 weisen radial nach innen, und die taschenartigen Aussparungen 20 umschließen die Vorsprünge 19 der Reibringe 11 und 12 (Reibring 12 ist in der Perspektive nicht dargestellt). Weiterhin sind Stützbolzen 13 gezeigt, die sich zwischen den Reibringen 11 und 12 erstrecken.

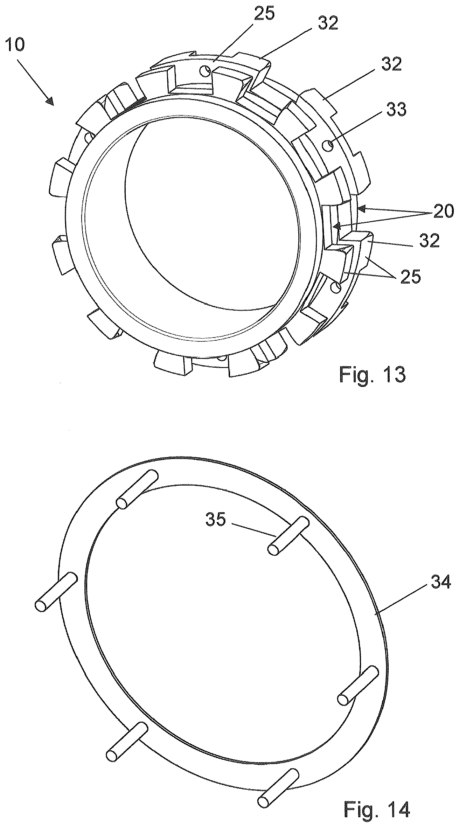

Eine Reihe der taschenartigen Aussparungen 20 ist in axialer Richtung geschlossen. Hierdurch wird ein Bewegungsfreiheitsgrad des Reibringpaares 11, 12 in eine axiale Richtung gesperrt. Zur vollständigen axialen Fixierung wird ein Befestigungsring 34, siehe Figur 14, mit aufgeschweißten beziehungsweise aufgelöteten Gewindebolzen 35, die durch Bohrungen 36 in den Vorsprüngen 19 der Reibringe 11, 12 und den geschlossenen Teil der Nabe 10 geführt werden, gegen die Rückseite der taschenartigen Aussparungen 20 verschraubt. Hierdurch wird gleichzeitig gewährleitstet, dass bei einem Herausbrechen eines Teiles des Reibrings 11, 12 dieser durch den Gewindebolzen gesichert ist.

Alternativ kann ein flacher Befestigungsring 21 direkt mit den Nocken 25 der Nabe 10 verschraubt werden. Als Gewindesicherung kann ein selbstsicherndes Gewinde oder sog. Screwlock-Gewindeeinsätze verwendet werden.

Zur axialen Sicherung der Reibringe 11 und 12 sind Befestigungsringe 21 gezeigt, die beispielhaft mit axialen Vorsprüngen 32 ausgeführt sind, und durch Löcher 33 in den Befestigungsringen 21 können Schraubelemente geführt werden, um die Befestigungsringe 21 miteinander zu verschrauben. Dabei können die axialen Vorsprünge 32 der Befestigungsringe 21 axial aufeinander gepresst werden oder durch die Verschraubung der Befestigungsringe 21 werden diese wenigstens axial miteinander verspannt. Somit sind die Reibringe 11 und 12 axial gesichert, und das Drehmoment der Reibringe 11 und 12 kann über die Vorsprünge 19 in den Aussparungen 20 auf die Nabe 10 übertragen werden.

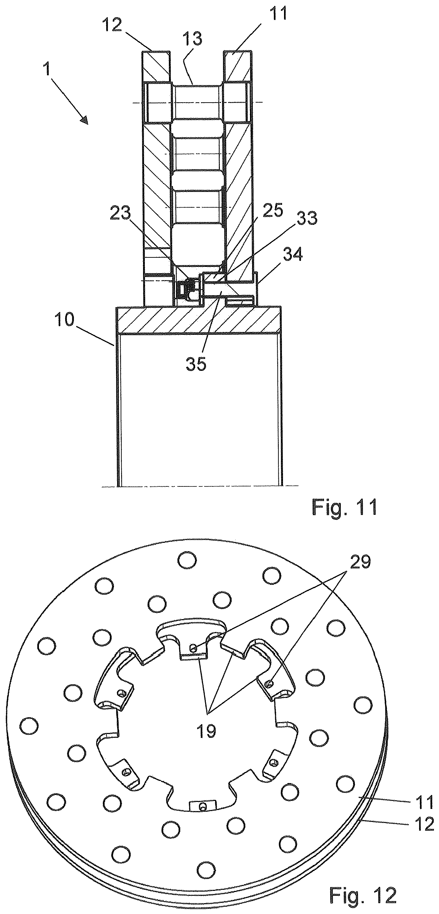

Figur 11 zeigt das Ausführungsbeispiel der Wellenbremsscheibe 1 gemäß Figur 10 in einer quergeschnittenen Ansicht. Dargestellt ist die Verbindung zwischen der Nabe 10 und dem Reibringpaar aus den Reibringen 11 und 12, zwischen denen sich die Stützbolzen 13 erstrecken. Die Nabe 10 besitzt Nocken 25, in denen Löcher 33 eingebracht sind. Durch Löcher 33 in einer der Reibringe 12 und durch die Löcher 33 in den Nocken 25 an der Nabe 10 können Gewindebolzen 35 hindurchgeführt werden, die sich an einem Befestigungsring 34 befinden. Endseitig an den Gewindebolzen 35 sind Schraubenmuttern 23 aufgeschraubt, um das Reibringpaar über einen der Reibringe 12 mit der Nabe 10 zu verbinden.

Figur 12 zeigt das Reibringpaar aus den Reibringen 11 und 12, wobei im unteren Reibring 12 Bohrungen 29 eingebracht sind, durch die die Gewindebolzen 35 des Befestigungsringes 34 hindurchgeführt werden können. Die Bohrungen 29 sind in Vorsprüngen 19 im Reibring 12 eingebracht, die sich radial nach innen erstrecken. Die Vorsprünge 19 des Reibringes 11 sind um einen Winkel von beispielhaft 30° zu den Vorsprüngen 19 des Reibringes 12 versetzt, sodass eine Zugänglichkeit der Schraubenmutter 23 gewährleistet ist, siehe hierzu Figur 11.

Figur 13 stellt eine Nabe 10 gemäß dem Ausführungsbeispiel aus Figur 10 perspektivisch dar. An der Nabe 10 erstrecken sich radial nach außen mehrere Nocken 25, die teilweise axiale Vorsprünge 32 besitzen, zwischen denen Zwischenräume gebildet werden, in die die Vorsprünge 19 der Reibringe 11 und 12 einrasten können. Damit kann das Bremsmoment über den Formschluss zwischen den Nocken 25 und den Vorsprüngen 19 übertragen werden, und die Verschraubung des Reibringes 12 mit der Nabe 10 durch die Gewindebolzen 35 des Befestigungsringes 34 dient lediglich der axialen Sicherung des Reibringpaares an der Nabe 10. Gezeigt sind weiterhin Löcher 33 in den Nocken 25, durch die die Gewindebolzen 35 des Befestigungsringes 34 hindurchgeführt werden können.

Figur 14 zeigt schließlich eine Perspektive Ansicht des Befestigungsringes 34 mit mehreren axial sich an diesem befindenden Gewindebolzen 35. Damit stellt die Verwendung des Befestigungsringes 34 gegenüber dem Befestigungsring 21 in Figur 10 eine weitere Alternative zur Verbindung des Reibringpaares mit der Nabe 10 dar.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumliche Anordnungen, können sowohl für sich als auch in den verschiedensten Kombinationen erfindungswesentlich sein.

### BEZUGSZEICHENLISTE

- 1: Wellenbremsscheibe
- 10: Nabe
- 11: Reibring
- 12: Reibring
- 13: Stützbolzen
- 13': Stützbolzen mit Durchgang
- 13a: Mittelabschnitt
- 13b: endseitiger Zapfen
- 14: Belaganpresskraft
- 15: Loch
- 16: Verbindungsschraube
- 17: Verbindungsschraube
- 18: Kulissenstein
- 19: Vorsprung
- 20: Aussparung
- 21: Befestigungsring
- 22: Keramikunterlegscheibe
- 23: Schraubenmutter
- 24: axialer Durchgang
- 25: Nocke, Vorsprung
- 26: Durchgangsbohrung
- 27: Durchgangsbohrung
- 28: Aussparung
- 29: Bohrung
- 30: Durchgangsbohrung
- 31: Nut
- 32: axialer Vorsprung
- 33: Loch
- 34: Befestigungsring
- 35: Gewindebolzen
- 36: Bohrung

## Patentansprüche

1. Gebaute Wellenbremsscheibe (1) mit einer Nabe (10), an der zwei aus Stahlwerkstoff hergestellte Reibringe (11, 12) parallel und beabstandet zueinander angeordnet sind, wobei zwischen den Reibringen (11, 12) Stützbolzen (13) zur Aufnahme einer axial wirkenden Belaganpresskraft (14) angeordnet sind, wobei
die Stützbolzen (13) rotationssymmetrisch ausgebildet sind und einen Mittelabschnitt (13a) und endseitige Zapfen (13b) aufweisen, wobei der Mittelabschnitt (13a) einen kleineren Durchmesser aufweist als die endseitigen Zapfen (13b), und wobei die Reibringe (11, 12) mittels Kulissensteinen (18) und Verbindungsschrauben (17) mit der Nabe (10) verbunden sind.

2. Wellenbremsscheibe (1) nach Anspruch 1, **dadurch gekennzeichnet, dass** die Reibringe (11, 12) Löcher (15) aufweisen, in die die Stützbolzen (13) endseitig eingesetzt sind.

3. Wellenbremsscheibe (1) nach einem der Ansprüche 1 oder 2, **dadurch gekennzeichnet, dass** die Verbindung zwischen den Stützbolzen (13) und den Reibringen (11, 12) durch eine Pressverbindung, durch eine Lötverbindung, durch eine Schweißverbindung, durch eine Nietverbindung und/oder durch eine Schraubverbindung mit Verbindungsschrauben (16) gebildet ist.

4. Wellenbremsscheibe (1) nach Anspruch 3, **dadurch gekennzeichnet, dass** die Lötverbindung durch ein Hochtemperaturlöten hergestellt ist und/oder dass die Schweißverbindung durch ein Laserstrahlschweißen oder durch ein Elektronenstrahlschweißen hergestellt ist.

5. Wellenbremsscheibe (1) nach einem der vorgenannten Ansprüche, **dadurch gekennzeichnet, dass** zwischen den Reibringen (11, 12) Kühlelemente angeordnet sind, die insbesondere auf der Innenseite von zumindest einem der Reibringe (11, 12) aufgeschweißt oder aufgelötet sind.

6. Wellenbremsscheibe (1) nach einem der vorgenannten Ansprüche, **dadurch gekennzeichnet, dass** die Reibringe (11, 12) an der Nabe (10) durch eine kraftschlüssige und/oder eine formschlüssige Verbindung angeordnet sind.

7. Wellenbremsscheibe (1) nach einem der vorgenannten Ansprüche, **dadurch gekennzeichnet, dass** die Reibringe (11, 12) radial nach innen weisende Vorsprünge (19) aufweisen, die in Aussparungen (20) eingreifen, die in der Nabe (10) eingebrachtsind.

8. Wellenbremsscheibe (1) nach einem der vorgenannten Ansprüche, **dadurch gekennzeichnet, dass** zumindest ein Befestigungsring (21) vorgesehen ist, der auf der Außenseite auf den Reibringen (11, 12) im radial inneren Bereich anliegt und wobei sich Verbindungsschrauben (17) durch den Befestigungsring (21) und wenigstens durch einen Teil oder eine Anformung der Nabe (10) hindurch erstrecken, und wobei insbesondere Keramikunterlegscheiben (22) vorgesehen sind, die zwischen dem Schraubenkopf der Verbindungsschrauben (17) und/oder zwischen den Schraubenmuttern (23) auf den Verbindungsschrauben (17) und den Reibringen (11, 12) angeordnet sind.

9. Wellenbremsscheibe (1) nach einem der vorgenannten Ansprüche, **dadurch gekennzeichnet, dass** eine innere Reihe von Stützbolzen (13') vorgesehen ist, die axiale Durchgänge (24) aufweisen, durch die sich die Verbindungsschrauben (17) hindurch erstrecken.

10. Wellenbremsscheibe (1) nach einem der vorgenannten Ansprüche, **dadurch gekennzeichnet, dass** an der Nabe (10) Nocken (25) angeformt sind, die sich radial nach außen gerichtet zwischen die Reibringe (11, 12) erstrecken und durch die Verbindungsschrauben (17)hindurchgeführtsind.

## Claims

1. Assembled axle brake disc (1) comprising a hub (10), on which two friction rings (11, 12) produced from steel material are arranged parallel to and spaced from one another, wherein between the friction rings (11, 12) supporting bolts (13) for absorbing an axially acting pad contact pressure force (14) are arranged, wherein
the supporting bolts (13) are designed rotation-symmetrically and have a middle portion (13a) and end-side pins (13b), wherein the middle portion (13a) has a smaller diameter than the end-side pins (13b), and wherein the friction rings (11, 12) are connected to the hub (10) by means of sliding blocks (18) and connecting screws (17).

2. The axle brake disc (1) according to claim 1, **characterized in that** the friction rings (11, 12) have holes (15), into which the supporting bolts (13) are inserted on the end side.

3. The axle brake disc (1) according to any one of claims 1 or 2, **characterized in that** the connection between the supporting bolts (13) and the friction rings (11, 12) is formed through a press-fit connection, through a soldered connection, through a welded connection, through a riveted connection and/or through a screw connection with connecting screws (16).

4. The axle brake disc (1) according to claim 3, **characterized in that** the soldered connection is produced through high-temperature soldering and/or **in that** the welded connection is produced through laser beam welding or through electron beam welding.

5. The axle brake disc (1) according to any one of the preceding claims, **characterized in that** between the friction rings (11, 12) cooling elements are arranged, which are welded on or soldered on in particular the inside of at least one of the friction rings (11, 12).

6. The axle brake disc (1) according to any one of the preceding claims, **characterized in that** the friction rings (11, 12) are arranged on the hub (10) through a non-positively joined and/or a positively-joined connection.

7. The axle brake disc (1) according to any one of the preceding claims, **characterized in that** the friction rings (11, 12) have protrusions (19) radially facing to the inside, which engage into recesses (20) which are introduced into the hub (10).

8. The axle brake disc (1) according to any one of the preceding claims, **characterized in that** at least one fastening ring (21) is provided, which on the outside abuts the friction rings (11, 12) in the radial inner region, and wherein connecting screws (17) extend through the fastening ring (21) and at least through a part or a molded-on portion of the hub (10), and wherein in particular ceramic washers (22) are provided, which are arranged between the screw head of the connecting screws (17) and/or between the screw nuts (23) on the connecting screws (17) and the friction rings (11, 12).

9. The axle brake disc (1) according to any one of the preceding claims, **characterized in that** an inner row of supporting bolts (13') is provided which have axial passages (24), through which the connecting screws (17) extend.

10. The axle brake disc (1) according to any one of the preceding claims, **characterized in that** cams (25) are molded onto the hub (10), which extend directed radially to the outside between the friction rings (11, 12) and through which the connecting screws (17) are passed.

## Revendications

1. Disque de frein assemblé monté sur essieu (1) avec un moyeu (10), sur lequel deux bagues de friction (11,12) fabriquées en matériau d'acier sont disposés parallèlement et à distance l'une de l'autre, des pistons d'appui (13) étant disposés entre les bagues de friction (11,12) pour recevoir une force de pression des garnitures (14) agissant axialement,
les pistons d'appui (13) étant constitués symétriques en rotation et comportant une section centrale (13a) et un tourillon (13b) en extrémité, la section centrale (13a) comportant un diamètre plus petit que les tourillons (13b) en extrémité et les bagues de friction (11,12) étant reliées au moyeu (10) au moyen de coulisseaux (18) et de vis de liaison (17).

2. Disque de frein assemblé monté sur essieu (1) selon la revendication 1, **caractérisé en ce que** les bagues de friction (11,12) comportent des trous (15), dans lesquels les pistons d'appui (13) sont insérés aux extrémités.

3. Disque de frein assemblé monté sur essieu (1) selon l'une quelconque des revendications 1 ou 2, **caractérisé en ce que** la liaison entre les pistons d'appui (13) et les bagues de friction (11,12) est constituée par une liaison par compression, par une liaison par brasage, par une liaison par soudure, par une liaison rivetée et/ou par une liaison à vis avec des vis de liaison (16).

4. Disque de frein assemblé monté sur essieu (1) selon la revendication 3, **caractérisé en ce que** la liaison par brasage est réalisée par un brasage à haute température et/ou **en ce que** la liaison par soudure est réalisée par une soudure au laser ou par une soudure par faisceau électronique.

5. Disque de frein assemblé monté sur essieu (1) selon l'une quelconque des revendications précédentes, **caractérisé en ce qu'**entre les bagues de friction (11,12) sont disposés des éléments de refroidissement, qui sont notamment soudés ou brasés sur la face intérieure d'au moins une des bagues de friction (11,12).

6. Disque de frein assemblé monté sur essieu (1) selon l'une quelconque des revendications précédentes, **caractérisé en ce que** les bagues de friction (11,12) sont disposées sur le moyeu (10) par une liaison par conformité de force et/ou conformité de forme.

7. Disque de frein assemblé monté sur essieu (1) selon l'une quelconque des revendications précédentes, **caractérisé en ce que** les bagues de friction (11,12) comportent des saillies (19) tournées radialement vers l'intérieur, qui viennent en prise dans des évidements (20) qui sont incorporées dans le moyeu (10).

8. Disque de frein assemblé monté sur essieu (1) selon l'une quelconque des revendications précédentes, **caractérisé en ce qu'**au moins une bague de fixation (21) est prévue, qui appuie sur le côté extérieur sur les bagues de friction (11,12) dans la zone radialement intérieure et des vis de liaison (17) s'étendant à travers la bague de fixation (21) et au moins à travers une partie ou une conformation du moyeu (10) et des rondelles de compensation en céramique (22) étant prévues, qui sont disposées entre la tête de vis des vis de liaison (17) et/ou entre les écrous (23) sur les vis de liaison (17) et les bagues de friction (11,12).

9. Disque de frein assemblé monté sur essieu (1) selon l'une quelconque des revendications précédentes, **caractérisé en ce qu'**une rangée intérieure d'pistons d'appui (13') est prévue, qui comportent des passages axiaux (24) à travers lesquels les vis de liaison (17) s'étendent.

10. Disque de frein assemblé monté sur essieu (1) selon l'une quelconque des revendications précédentes, **caractérisé en ce que** des cames (25) sont conformées sur le moyeu (10) qui s'étendent orientées radialement vers l'extérieur entre les bagues de friction (11,12) et sont traversées par les vis de liaison (17).
